# FASCICULE DE BREVET EUROPEEN

(11) **EP 4 514 116 B1**
(45) Date de publication et mention de la délivrance du brevet: **21.01.2026**
(21) Numéro de dépôt: 23721904.3
(22) Date de dépôt: 24.04.2023
(51) Int. Cl.: A01F 25/08, F26B 9/10, F26B 21/00

(54) **COLONNE DE VENTILATION POUR CÉRÉALES**
BELÜFTUNGSSÄULE FÜR GETREIDE
VENTILATION COLUMN FOR GRAIN

(30) Priorité: 27.04.2022 FR 2203929
(43) Date de publication de la demande: 05.03.2025
(73) Titulaire: Euroventilatori, 38300 Nivolas Vermelle (FR)
(72) Inventeur: HOLLARD, Mathieu, 38300 Nivolas Vermelle (FR)
(74) Mandataire: Bouvier, Thibault
(86) Numéro de dépôt international: PCT/EP2023/060659
(87) Numéro de publication internationale: WO 2023/208846

(56) Documents cités:
- CA-A1- 3 095 397
- CN-A- 110 127 210
- CN-U- 211 458 663
- DE-A1- 2 362 402
- RU-C1- 2 650 536
- RU-C1- 2 752 662
- SU-A1- 1 242 046

## Description

La présente invention concerne le domaine de la ventilation des céréales.

La ventilation est la méthode la plus couramment utilisée pour refroidir les céréales stockées en cellule ou en case à fond plat. Cela permet non seulement de limiter les risques d'explosion connu notamment dans les silos de céréales, mais aussi de conserver leurs qualités nutritionnelles et sanitaires, donc d'améliorer leur conservation.

La ventilation permet également de limiter l'augmentation de température des grains et de diminuer le risque de développement de moisissures.

Dans ce domaine, il existe plusieurs solutions pour ventiler les grains. Par exemple, il existe des gaines de ventilation qui sont recouvertes d'une hauteur variable de grains et qui permettent de faire traverser l'air dans le grain. Mais le problème est justement la hauteur variable de grain, de sorte que la distribution d'air au sein de celui-ci n'est pas optimale.

Il existe des solutions dans lesquelles l'air est soufflé dans le grain, mais de telles solutions sont moins efficaces que celles par dépression dans lesquelles l'air est aspiré.

Dans ce domaine, il existe par exemple des colonnes de ventilation. Par exemple, il est connu le document FR1358652A, qui concerne une colonne de ventilation par dépression. Cependant, à l'instar des gaines de ventilation, la colonne divulguée dans ce document est fixe, immobile, ce qui limite grandement son utilisation.

Il est également connu le document FR2922536A1 qui concerne une colonne de ventilation par dépression. Grâce à un aspirateur disposé en haut de colonne, l'air entre dans la base perforée de la colonne et est refoulé par les tuyaux pleins, à l'extérieur, à l'aide de l'aspirateur. La dépression générée par l'aspirateur dans la base perforée de la colonne crée un flux d'air de bas en haut, à travers les céréales stockées autour de la base de la colonne, assurant ainsi leur ventilation. L'embase est perforée sur toute sa surface par de nombreux petits trous circulaires. Sous le poids des céréales, l'embase est sujette à déformation et pour remédier à ce problème, il est prévu de remplacer les simples perforations circulaires par une structure perforée en ouïes directionnelles de type « persienne ».

DE 23 62 402 A1 divulgue une colonne de ventilation selon le préambule de la revendication 1.

La présente invention vise à améliorer encore les solutions existantes en proposant une solution qui permet d'optimiser le flux d'air par rapport aux solutions de l'art antérieur.

A cet effet, la présente invention concerne une colonne de ventilation (100) pour céréales, comprenant :
- un corps principal (10), cylindrique, comprenant une extrémité proximale configurée pour être reliée à un ventilateur (50), et une extrémité distale, opposée à l'extrémité proximale, et configurée pour être reliée à une embase (30),
- une embase (30), destinée à être recouverte par un amas de céréales et comprenant une extrémité proximale reliée à l'extrémité distale du corps principal (10) et une extrémité distale opposée à l'extrémité proximale,
- ladite embase (30) comprenant un ensemble d'évidements (31) disposés radialement, chaque évidement présentant un diamètre équivalent,
- les évidements (31_1, 31_2, 31_3) de l'embase (30) présentant un gradient de diamètre équivalent décroissant depuis l'extrémité distale de l'embase (30) vers l'extrémité proximale de l'embase (30).

Elle est essentiellement caractérisée en ce que :
elle comprend en outre une chaussette (60) en tissu extensible, configurée pour épouser la forme de l'embase (30), et dont la maille est inférieure ou égale au plus petit diamètre équivalent des évidements (31) de l'embase (30).

On peut prévoir que le corps principal (10) comprend un ensemble d'évidements (31) disposés radialement, les évidements (31) disposés sur un même rayon présentant le même diamètre équivalent.

On peut prévoir que le corps principal (10) comprend un ensemble d'évidements (31), le plus gros diamètre équivalent des évidements (31) du corps principal (10) étant inférieur ou égal au plus petit diamètre équivalent des évidements (31) de l'embase (30).

On peut prévoir que les évidements (31) du corps principal (10) présentent un gradient de diamètre équivalent décroissant depuis l'extrémité distale du corps principal (10) vers l'extrémité proximale du corps principal (10).

On peut prévoir que l'embase (30) présente une forme cylindrique.

On peut prévoir que l'embase (30) présente une forme conique ou tronconique, dans laquelle le diamètre équivalent de l'extrémité distale de l'embase (30) est inférieur au diamètre équivalent de l'extrémité distale du corps principal (10) : la colonne étant optionnellement en outre équipée d'un filetage (11) permettant de visser ladite colonne dans un amas de grains de céréales.

On peut prévoir que l'embase (30) présente une forme tronconique inversée, dans laquelle le diamètre équivalent de l'extrémité distale de l'embase (30) est supérieur au diamètre équivalent de l'extrémité distale du corps principal (10).

On peut prévoir en outre une chaussette (60) en tissu extensible, configurée pour épouser la forme de l'embase (30), et dont la maille est inférieure ou égale au plus petit diamètre équivalent des évidements (31) de l'embase (30).

On prévoit de préférence que la maille de la chaussette (60) en tissu extensible est inférieure ou égale à 1 mm².

On peut prévoir en outre un ventilateur (50), disposé en tête de colonne.

On peut prévoir que le ventilateur (50) comprend une turbine à réaction.

D'autres caractéristiques et avantages de la présente invention apparaîtront plus clairement à la lecture de la description suivante donnée à titre d'exemple illustratif et non limitatif et faite en référence aux figures annexées.

### DESCRIPTIF DES DESSINS

- [Fig. 1] illustre une colonne de ventilation selon l'art antérieur,
- [Fig. 2] illustre une autre colonne de ventilation selon l'art antérieur
- [Fig. 3] illustre un mode de réalisation d'une colonne de ventilation selon l'invention,
- [Fig. 4] illustre la colonne de ventilation de la figure 3 équipée d'une chaussette selon l'invention,
- [Fig. 5] illustre un mode de réalisation d'une embase cylindrique d'une colonne de ventilation selon l'invention, vue de face,
- [Fig. 6] illustre un mode de réalisation d'une colonne de ventilation selon l'invention, comprenant une embase conique,
- [Fig. 7] illustre un mode de réalisation d'une embase tronconique inversée d'une colonne de ventilation selon l'invention, en vue tridimensionnelle, avec un gradient de diamètre équivalent des évidements.

### DESCRIPTION DETAILLEE

Une colonne de ventilation 100 comprend deux extrémités, opposées l'une par rapport à l'autre.

Une colonne de ventilation 100 est destinée à être disposée dans une position sensiblement verticale ou inclinée, mais non horizontale.

Par référence à une position verticale, on définit par extrémité proximale l'extrémité la plus haute, c'est-à-dire la plus éloignée du sol, et configurée pour y relier un ventilateur 50 ; et par extrémité distale l'extrémité la plus basse, c'est-à-dire la plus proche du sol.

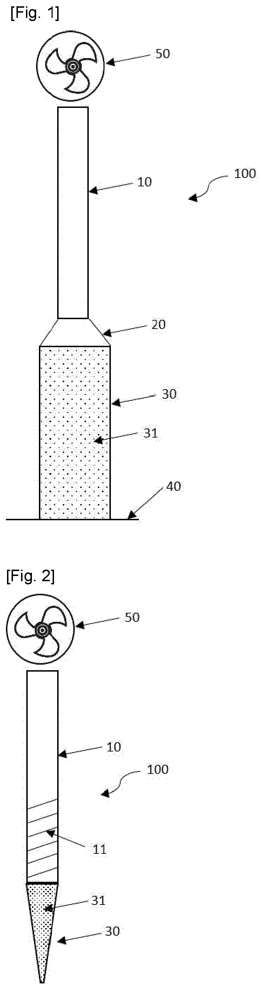

La figure 1 illustre un premier mode de réalisation d'une colonne de ventilation 100 selon l'art antérieur.

Dans ce mode de réalisation, la colonne de ventilation 100 comprend un corps principal 10, en l'espèce un tube en métal dont la longueur est adaptée aux besoins de l'utilisateur, et qui peut comprendre un ensemble d'au moins une rallonge afin d'en augmenter la longueur.

La colonne de ventilation 100 est équipée d'un ventilateur 50 à l'extrémité proximale du corps principal 10, également appelée « tête de colonne ». Typiquement le ventilateur 50 comprend un manchon en partie inférieure qui vient s'emboiter dans le corps principal 10 d'une colonne de ventilation 100, à force, le diamètre externe du manchon étant sensiblement égal au diamètre interne du corps principal 10 de la colonne de ventilation 100.

Le corps principal 10 est cylindrique et relié à une embase 30, sur la figure 1 également cylindrique. Le diamètre équivalent de l'embase 30 peut être supérieur au diamètre équivalent du corps principal 10, auquel cas la colonne de ventilation 100 comprend un manchon de réduction 20 pour adapter les deux diamètres équivalents (voir figure 1).

Dans ce mode de réalisation selon l'art antérieur, l'embase 30 est un corps cylindrique percé d'évidements 31, ou trous traversants, qui présentent tous le même diamètre équivalent.

L'embase 30 peut reposer sur un pied 40, en l'espèce en forme de croix, ou sous forme d'une platine. Par exemple la platine est de base carrée, pour une plus grande stabilité. Elle peut aussi se présenter sous forme de disque.

En fonctionnement, le ventilateur 50, qui peut être un aspirateur, génère une dépression à l'intérieur de la colonne. L'air est aspiré à travers les céréales, il passe par les évidements 31 de l'embase 30 dans le cœur du corps principal 10 avant d'être éjecté par le ventilateur 50, selon une direction d'éjection rectiligne.

La figure 2 illustre un deuxième mode de réalisation d'une colonne de ventilation 100 selon l'art antérieur, dont le principe de fonctionnement est identique au mode de réalisation de la figure 1.

Dans sa structure, par rapport au mode de réalisation de la figure 1, cette colonne de ventilation 100 de la figure 2 présente en embase 30 conique dont le sommet du cône est l'extrémité distale de la colonne de ventilation 100.

De telles colonnes sont évidemment moins stables que celles de la figure 1, elles ne peuvent tenir qu'en étant vissées dans les grains, ce pourquoi elles comprennent un filetage 11, la forme conique de l'embase 30 permettant une insertion plus aisée dans les grains de céréales.

Par rapport à cet état de l'art selon l'un ou l'autre des modes de réalisation précédemment décrits, la présente invention permet notamment d'améliorer la circulation de l'air dans le grain.

A cet effet, on prévoit que l'embase 30 comprend des évidements 31 qui ne présentent pas tous le même diamètre équivalent.

En l'espèce, on prévoit que les évidements 31 de l'embase 30 présentent un gradient de diamètre équivalent, qui est décroissant depuis l'extrémité distale de l'embase 30, c'est-à-dire depuis le sol, ou le bas, vers l'extrémité proximale de l'embase 30, c'est-à-dire vers le ventilateur 50, ou le haut.

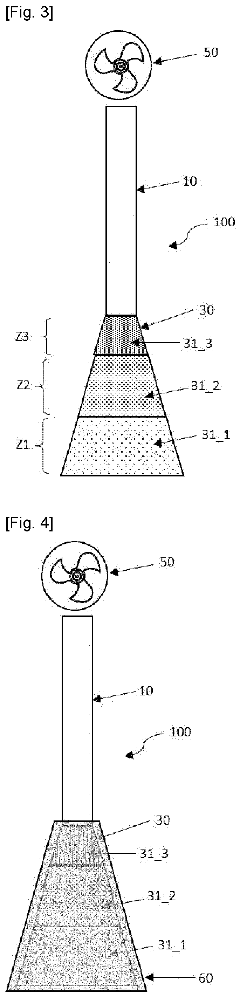

Par exemple sur la figure 3, on a représenté trois zones Z1, Z2 et Z3 d'évidements respectivement référencés 31_1, 31_2 et 31_3, en l'espèce superposées, dans lesquelles les évidements 31 de chaque zone présentent un même diamètre équivalent pour ladite zone Z1, Z2 ou Z3 ; mais présentent des diamètres équivalents différents entre deux zones.

En l'espèce, les évidements 31_1 de la zone distale Z1 présentent un diamètre équivalent supérieur au diamètre équivalent des évidements 31_2 de la zone intermédiaire Z2, eux-mêmes présentant un diamètre équivalent supérieur au diamètre équivalent des évidements 31_3 de la zone proximale Z3 de l'embase 30 (voir figure 3).

Le nombre de trois zones est purement illustratif. La hauteur d'une zone donnée peut être différente de la hauteur d'une autre zone.

On peut par exemple prévoir un gradient décroissant de hauteur de zone depuis l'extrémité distale de l'embase 30, c'est-à-dire depuis le sol, vers l'extrémité proximale de l'embase 30, c'est-à-dire vers le ventilateur 50.

Dans ce cas, sur la figure 3, on a : h(Z1) > h(Z2) > h(Z3), avec h la hauteur de chaque zone. Du fait des pertes de charges, une telle configuration permet d'assurer que l'air est aspiré à travers toute la hauteur de l'embase 30 de la colonne de ventilation 100.

Le gradient de hauteur de zone est préférable mais n'est pas obligatoire.

On peut par exemple aussi prévoir que la hauteur d'une zone est inférieure à la hauteur d'une zone qui lui est supérieure, par exemple h(Z1) < h(Z2) ou h(Z2) < h(Z3), ou h(Z1) < h(Z2) > h(Z3), ou encore h(Z1) > h(Z2) < h(Z3), etc.

Dans ce cas, on choisit avantageusement le diamètre équivalent des évidements 31 de chaque zone en fonction du nombre d'évidements 31 et de la hauteur de la zone.

En l'espèce, on prévoit astucieusement que grad(N_Z*(rr*D_Z/2)²) est décroissant de l'extrémité distale de la colonne de ventilation 100 vers l'extrémité proximale de la colonne de ventilation 100, avec N_Z le nombre d'évidements 31 d'une zone donnée et D_Z le diamètre équivalent de chaque évidement 31 de ladite zone Z.

La formule N_Z*(π*D_Z/2)² revient à calculer la surface de chaque évidement (π*D_Z/2)² multipliée par N_Z le nombre d'évidements 31, c'est-à-dire de calculer la surface totale des évidements 31 d'une zone donnée, donc la capacité d'échange d'air d'une zone donnée.

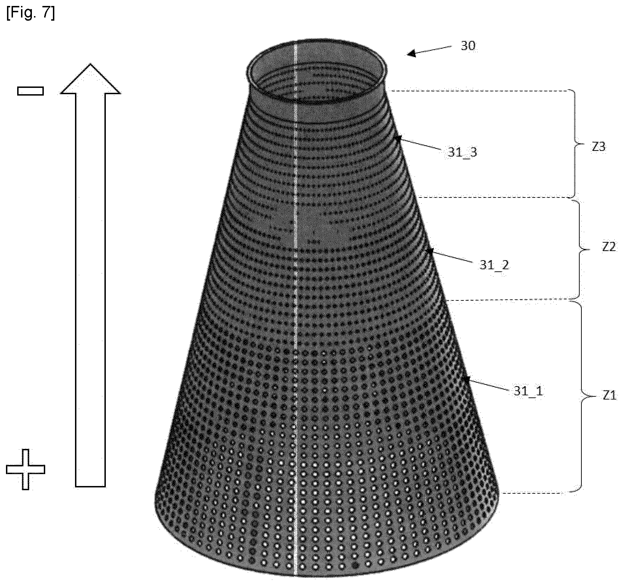

On prévoit ainsi de préférence que le gradient de surface totale des évidements 31 d'une zone donnée est décroissant de bas en haut de l'embase 30 de la colonne de ventilation 100, comme illustré par la flèche de la figure 7.

De préférence, on prévoit que les évidements 31 de l'embase 30 sont disposés radialement, les évidements 31 disposés sur un même rayon présentant le même diamètre équivalent.

Alternativement ou en combinaison, on peut aussi prévoir que le corps principal 10 comprend un ensemble d'évidements 31, en particulier disposés radialement où les évidements 31 disposés sur un même rayon présentant le même diamètre équivalent.

Les évidements 31 du corps principal 10 sont disposés en partie distale du corps principal 10 et peuvent être disposés à une distance prédéterminée de l'extrémité proximale du corps principal 10, afin de garantir qu'en fonctionnement, les évidements 31 du corps principal 10 sont recouverts par les grains de céréale et pas à l'air libre.

On peut prévoir que les évidements 31 du corps principal 10 présentent tous le même diamètre équivalent, ou qu'ils présentent un gradient de diamètre équivalent décroissant depuis l'extrémité distale du corps principal 10 vers l'extrémité proximale du corps principal 10.

Dans ce mode de réalisation, le plus gros diamètre équivalent des évidements 31 du corps principal 10 est de préférence inférieur ou égal au plus petit diamètre équivalent des évidements 31 de l'embase 30.

On a avantageusement ainsi un gradient décroissant de diamètre équivalent des évidements 31 sur l'ensemble de la colonne de ventilation 100, sur l'embase 30 et le corps principal 10. Grâce au gradient de diamètres équivalents des évidements 31, les évidements 31 les plus larges sont disposés le plus loin de la turbine, ce qui optimise les pertes de charge.

Selon l'invention, l'embase 30 peut présenter une pluralité de formes.

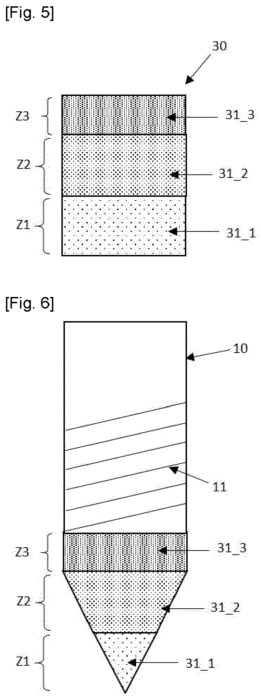

Dans un premier mode de réalisation, illustré sur la figure 5, l'embase 30 présente une forme cylindrique. Elle peut comprend un pied 40, par exemple en forme de croix, ou sous forme d'une platine, notamment en forme de disque.

Dans un deuxième mode de réalisation, illustré sur la figure 6, l'embase 30 présente une forme conique ou tronconique, pointe vers le bas, dans laquelle le diamètre équivalent de l'extrémité distale de l'embase 30 est inférieur au diamètre équivalent de l'extrémité distale du corps principal 10. Dans ce cas, le corps principal 10 de la colonne est avantageusement en outre équipée d'un filetage 11 permettant de visser ladite colonne dans un amas de grains de céréales.

Dans un troisième mode de réalisation, illustré sur la figure 3 ou la figure 7, l'embase 30 présente une forme tronconique inversée, dans laquelle le diamètre équivalent de l'extrémité distale de l'embase 30 est supérieur au diamètre équivalent de l'extrémité distale du corps principal 10.

Ce mode de réalisation présente l'avantage que la colonne de ventilation 100 est particulièrement stable du fait de la largeur de sa base, c'est-à-dire de l'embase 30. Une telle colonne de ventilation 100 peut ainsi être prépositionnée et bougée facilement dans une cellule ou en case à fond plat avant que celle-ci soit remplie de grains.

Grâce à sa forme tronconique inversée, l'embase 30 selon l'invention permet une circulation de l'air plus efficace, notamment aux faibles hauteurs, que les embases 30 à cône traditionnel (pointe vers le bas) ou à embases 30 cylindriques. Dans ce mode de réalisation, la forme tronconique inversée permet d'augmenter la surface d'échange d'air par rapport à une forme conique ou cylindrique. En l'espèce, par rapport à une forme cylindrique présentant les mêmes évidements 31, une forme tronconique inversée permet de multiplier la surface d'échange d'air d'un facteur 2.

Selon un autre de ses aspects, la colonne de ventilation 100 comprend en outre une chaussette 60 configurée pour épouser au moins la forme de l'embase 30, comme illustré sur la figure 4.

On peut prévoir que la chaussette 60 est en outre configurée pour épouser la forme du corps principal 10.

La chaussette 60 est en matériau extensible, en l'espèce en tissu maillé, comprenant un réseau dont le diamètre équivalent de la maille est de préférence inférieur ou égal au plus petit diamètre équivalent des évidements 31 de l'embase 30, et le cas échéant inférieur ou égal au plus petit diamètre équivalent des évidements 31 du corps principal 10.

Grâce à cette caractéristique, la chaussette 60 agit comme un filtre qui empêche les grains de pénétrer dans les évidements 31 de la colonne de ventilation 100, c'est-à-dire l'embase 30 ou le corps principal 10.

**Avantageusement,** on choisit une chaussette 60 dont la maille permet de retenir les graines de colza. En l'espèce, la maille de la chaussette 60 est inférieure ou égale à 1 mm².

On peut prévoir que la colonne de ventilation 100 comprend en outre un ventilateur 50, disposé en tête de colonne, à l'extrémité proximale du corps principal 10.

De préférence, le ventilateur 50 est à dépression, de sorte à aspirer l'air de la colonne de ventilation 100 et le rejeter à l'extérieur de l'amas de grains de céréales.

On peut prévoir que le ventilateur 50 comprend une turbine à action, qui travaille avec le creux, l'intérieur de la pale.

Toutefois, le ventilateur 50 comprend avantageusement une turbine à réaction, qui travaille avec le dos de la pale, et qui est moins bruyant qu'une turbine à action.

La présente invention n'est pas limitée aux céréales ou graines de céréales. En l'espèce, par concision, par « céréales », on entend tout type de céréales, de graines végétales, de pommes de terre et tout type de racines : oignons, carottes, céleris raves, betteraves potagères, etc.

### Nomenclature

10 corps principal
11 filetage
20 manchon de réduction
30 embase
31, 31_1, 31_2, 31_3 évidements de l'embase
40 pied
50 ventilateur
60 chaussette
100 colonne de ventilation

## Revendications

1. Colonne de ventilation (100) pour céréales, comprenant :
- un corps principal (10), cylindrique, comprenant une extrémité proximale configurée pour être reliée à un ventilateur (50), et une extrémité distale, opposée à l'extrémité proximale, et configurée pour être reliée à une embase (30),
- une embase (30), destinée à être recouverte par un amas de céréales et comprenant une extrémité proximale reliée à l'extrémité distale du corps principal (10) et une extrémité distale opposée à l'extrémité proximale,
- ladite embase (30) comprenant un ensemble d'évidements (31) disposés radialement, chaque évidement présentant un diamètre équivalent,
- les évidements (31_1, 31_2, 31_3) de l'embase (30) présentant un gradient de diamètre équivalent décroissant depuis l'extrémité distale de l'embase (30) vers l'extrémité proximale de l'embase (30),
**caractérisée en ce que** :
elle comprend en outre une chaussette (60) en tissu extensible, configurée pour épouser la forme de l'embase (30), et dont la maille est inférieure ou égale au plus petit diamètre équivalent des évidements (31) de l'embase (30).

2. Colonne de ventilation (100) selon la revendication 1, dans laquelle le corps principal (10) comprend un ensemble d'évidements (31) disposés radialement, les évidements (31) disposés sur un même rayon présentant le même diamètre équivalent.

3. Colonne de ventilation (100) selon la revendication 2, dans laquelle le corps principal (10) comprend un ensemble d'évidements (31), le plus gros diamètre équivalent des évidements (31) du corps principal (10) étant inférieur ou égal au plus petit diamètre équivalent des évidements (31) de l'embase (30).

4. Colonne de ventilation (100) selon la revendication 3, dans laquelle les évidements (31) du corps principal (10) présentent un gradient de diamètre équivalent décroissant depuis l'extrémité distale du corps principal (10) vers l'extrémité proximale du corps principal (10).

5. Colonne de ventilation (100) selon l'une quelconque des revendications précédentes, dans laquelle l'embase (30) présente une forme cylindrique.

6. Colonne de ventilation (100) selon l'une quelconque des revendications 1 à 4, dans laquelle l'embase (30) présente une forme conique ou tronconique, dans laquelle le diamètre équivalent de l'extrémité distale de l'embase (30) est inférieur au diamètre équivalent de l'extrémité distale du corps principal (10) : la colonne étant optionnellement en outre équipée d'un filetage (11) permettant de visser ladite colonne dans un amas de grains de céréales.

7. Colonne de ventilation (100) selon l'une quelconque des revendications 1 à 4, dans laquelle l'embase (30) présente une forme tronconique inversée, dans laquelle le diamètre équivalent de l'extrémité distale de l'embase (30) est supérieur au diamètre équivalent de l'extrémité distale du corps principal (10).

8. Colonne de ventilation (100) selon l'une quelconque des revendications précédentes, comprenant en outre un ventilateur (50), disposé en tête de colonne.

9. Colonne de ventilation (100) selon la revendication 8, dans lequel le ventilateur (50) comprend une turbine à réaction.

10. Colonne de ventilation (100) selon l'une quelconque des revendications précédentes, dans laquelle la maille de la chaussette (60) en tissu extensible est inférieure ou égale à 1 mm².

## Patentansprüche

1. Eine Getreidebelüftungssäule (100) bestehend aus:
- einem zylindrischen Hauptkörper (10) mit einem proximalen Ende zur Verbindung mit einem Ventilator (50) und einem distalen Ende gegenüber dem proximalen Ende zur Verbindung mit einem Sockel (30),
- einem Sockel (30) zur Abdeckung eines Getreidehaufens mit einem proximalen Ende, das mit dem distalen Ende des Hauptkörpers (10) verbunden ist, und einem distalen Ende gegenüber dem proximalen Ende,
- einem Sockel (30) mit radial angeordneten Vertiefungen (31), wobei jede Vertiefung einen äquivalenten Durchmesser aufweist,
- wobei die Vertiefungen (31_1, 31_2, 31_3) des Sockels (30) einen abnehmenden äquivalenten Durchmesser vom distalen zum proximalen Ende des Sockels (30) aufweisen,
charakterisiert dadurch, dass:
Sie umfasst ferner einen Schlauch (60) aus Stretchgewebe, der sich der Form des Sockels (30) anpasst und dessen Maschenweite kleiner oder gleich dem kleinsten äquivalenten Durchmesser der Vertiefungen ist. der Aussparungen (31) im Sockel (30).

2. Eine Getreidebelüftungssäule (100) nach Anspruch 1, wobei der Hauptkörper (10) eine Reihe radial angeordneter Aussparungen (31) aufweist, wobei die Aussparungen (31) auf demselben Radius denselben äquivalenten Durchmesser besitzen.

3. Eine Getreidebelüftungssäule (100) nach Anspruch 2, wobei der Hauptkörper (10) eine Reihe von Aussparungen (31) aufweist, wobei der größte äquivalente Durchmesser der Aussparungen (31) im Hauptkörper (10) kleiner oder gleich dem kleinsten äquivalenten Durchmesser der Aussparungen (31) im Sockel (30) ist.

4. Eine Getreidebelüftungssäule (100) nach Anspruch 3, wobei die Aussparungen (31) im Hauptkörper (10) einen abnehmenden äquivalenten Durchmesser vom distalen zum proximalen Ende des Hauptkörpers (10) aufweisen.

5. Eine Getreidebelüftungssäule (100) nach einem der vorhergehenden Ansprüche, wobei der Sockel (30) zylindrisch geformt ist.

6. Eine Getreidebelüftungssäule (100) nach einem der Ansprüche 1 bis 4, wobei der Sockel (30) konisch oder kegelstumpfförmig ist und der äquivalente Durchmesser des distalen Endes des Sockels (30) kleiner ist als der äquivalente Durchmesser des distalen Endes des Hauptkörpers (10). Die Säule kann optional mit einem Gewinde (11) zum Einschrauben in einen Getreidehaufen versehen sein.

7. Eine Getreidebelüftungssäule (100) nach einem der Ansprüche 1 bis 4, wobei der Sockel (30) eine umgekehrt kegelstumpfförmige Gestalt aufweist und der äquivalente Durchmesser des distalen Endes des Sockels (30) größer ist als der äquivalente Durchmesser des distalen Endes des Hauptkörpers (10).

8. Eine Getreidebelüftungssäule (100) nach einem der vorhergehenden Ansprüche, ferner umfassend einen oben an der Säule angeordneten Ventilator (50).

9. Eine Getreidebelüftungssäule (100) nach Anspruch 8, wobei der Ventilator (50) eine Reaktionsturbine umfasst.

10. Eine Getreidebelüftungssäule (100) nach einem der vorhergehenden Ansprüche, wobei die Maschenweite des Stretchgewebeschlauchs (60) ≤ 1 mm² beträgt.

## Claims

1. Grain ventilation column (100), comprising:
- a cylindrical main body (10), comprising a proximal end configured to be connected to a fan (50), and a distal end, opposite the proximal end, configured to be connected to a base (30),
- a base (30), intended to be covered by a grain pile and comprising a proximal end connected to the distal end of the main body (10) and a distal end opposite the proximal end,
- said base (30) comprising a set of radially arranged recesses (31), each recess having an equivalent diameter,
- the recesses (31_1, 31_2, 31_3) of the base (30) having a decreasing equivalent diameter gradient from the distal end of the base (30) to the proximal end of the base (30),
**characterized in that**:
it comprises in in addition to a sock (60) made of stretch fabric, configured to fit the shape of the base (30), and whose mesh is less than or equal to the smallest equivalent diameter of the recesses (31) of the base (30).

2. A ventilation column (100) according to claim 1, wherein the main body (10) comprises a set of radially arranged recesses (31), the recesses (31) arranged on the same radius having the same equivalent diameter.

3. A ventilation column (100) according to claim 2, wherein the main body (10) comprises a set of recesses (31), the largest equivalent diameter of the recesses (31) in the main body (10) being less than or equal to the smallest equivalent diameter of the recesses (31) in the base (30).

4. A ventilation column (100) according to claim 3, wherein the recesses (31) in the main body (10) have a decreasing equivalent diameter gradient from the distal end of the main body (10) to the proximal end of the main body (10).

5. A ventilation column (100) according to any one of the preceding claims, wherein the base (30) has a cylindrical shape.

6. A ventilation column (100) according to any one of claims 1 to 4, wherein the base (30) has a conical or frustoconical shape, wherein the equivalent diameter of the distal end of the base (30) is less than the equivalent diameter of the distal end of the main body (10): the column optionally being further equipped with a thread (11) for screwing said column into a grain pile.

7. A ventilation column (100) according to any one of claims 1 to 4, wherein the base (30) has an inverted frustoconical shape, wherein the equivalent diameter of the distal end of the base (30) is greater than the equivalent diameter of the distal end of the main body (10).

8. A ventilation column (100) according to any one of the preceding claims, further comprising a fan (50) disposed at the top of the column.

9. A ventilation column (100) according to claim 8, wherein the fan (50) comprises a reaction turbine.

10. A ventilation column (100) according to any one of the preceding claims, wherein the mesh size of the stretch fabric sock (60) is less than or equal to 1 mm².
